Europäisches Patentamt

European Patent Office

Office européen des brevets

(11) Publication number: **0 409 346 A1**

# EUROPEAN PATENT APPLICATION

(21) Application number: 90201940.5

(51) Int. Cl.5: **H04M 1/02**

(22) Date of filing: 16.07.90

(30) Priority: 21.07.89 NL 8901896

(43) Date of publication of application:
23.01.91 Bulletin 91/04

(84) Designated Contracting States:
AT BE CH DE DK ES FR GB GR IT LI LU NL SE

(71) Applicant: ERICSSON TELECOMMUNICATIE
B.V.
1, Haansbergseweg
NL-5121 LG Rijen(NL)

(72) Inventor: Van den Elshout, Adrianus Petrus
Aloyius
12, Echbronk
NL-4847 AN Teteringen(NL)

(74) Representative: van der Arend, Adrianus G.A.,
Ir. et al
EXTERPATENT B.V. P.O. Box 90649
NL-2509 LP The Hague(NL)

(54) Wall telephone unit.

(57) A wall telephone unit, comprises a base part and a handset. The base part has a recess to permit the accommodation therein of an end part of the handset for hanging up the handset on the base part. When the handset is hung up the end part rests on a bottom supporting part of the recess. The recess is bounded by a fixed stop part and a stop part lying opposite which is movable essentially at right angles to the fixed stop part, in such a way that the stop parts form a holding space for retaining at least a part of the end part of the handset, the holding space having an insertion aperture for allowing through the end part of the handset, and the movable stop part being pressed towards the fixed stop part by resilient means.

FIG. 4.

**WALL TELEPHONE UNIT.**

The invention relates to a wall telephone unit, comprising a base part and a handset, the base part having a recess to permit the accommodation therein of an end part of the handset for hanging up the handset on the base part, and the end part resting on a bottom supporting part of the recess when the handset is hung up.

A wall telephone unit of this type is known in practice. The end part of the handset is generally the listening part of the handset. In the known wall telephone unit the end part of the handset and the recess are of such a shape that the handset can be hung up endways vertically in the base part. The known unit has, however, the disadvantage that the end part can come away from the base part relatively easily as a result of vibrations or through contact from people going past.

Further, with the prior art wall telephone unit after actuation of a switch provided in the base part or in the handset upon placing the handset into the base part the switch must be maintained in its actuated state by the weight of the handset. Therefore the handset must have a considerable weight and/or the switch must be very sensitive. Both approaches are expensive while a heavy handset is tedious in use and a sensitive switch may lead to unintended switching due to vibrations.

The object of the invention is to eliminate the disadvantages of the known wall telephone unit.

This object is achieved according to the invention for the wall telephone unit of the type mentioned in the preamble in that the recess is bounded by a fixed stop part and a stop part lying opposite which is movable essentially at right angles to the fixed stop part, in such a way that the stop parts form a holding space for retaining at least a part of the end part of the handset, the holding space having an insertion aperture for allowing through the end part of the handset, and the movable stop part being pressed towards the fixed stop part by resilient means. In this way the handset can be removed from the base part only when the handset is turned relative to the base part in such a way that the end part thereof is released from the supporting part of the recess of the base part, following which the end part can be removed from the holding space. This means that the handset can be hung up in the base part so that it is essentially secure. The telephone unit can in this case even be fixed to a slanting wall in such a way that when the handset is hung up the end part of the handset is at least partially supported by the stop part furthest from the wall. With a suitable shape of the stop parts the unit can then even be fixed to the ceiling. Further if a switch is provided in the telephone unit at such a place or opposite the fixed stop part or the movable stop part, that the switch is actuated due to the handset being retained between the stop parts, the handset may be of any weight and the switch may be of any sensitivity. Therefore such handset is easy and pleasantly to use and a switch of less sensitivity and thus less costly may be used.

The distance between the stop parts when the end part of the handset is removed from the holding space is preferably smaller than the corresponding dimension of the end part. The end part is consequently pressed resiliently by the movable stop part against the fixed stop part, as a result of which accidental falling out of the handset hung up in the base part is further counteracted.

The telephone unit preferably has fitted on the insertion side of the holding space between the base part and the movable stop part hinge means with a pin running at right angles to the direction of insertion of the end part of the handset. A simple design is obtained in this way. The design is even simpler if the movable stop part is closest to a wall on which the telephone unit has to be fixed.

The hinge means preferably comprise hinges of the knife-edge hinge type, both the movable stop part and the base part having at least one resting part and at least one supporting part for supporting a resting part, and the contact points between the resting part and the supporting parts of all hinges lying in line with one another. Unlike, for example, a pin/hole type of hinge, this produces a simple design in which no friction occurs in the contact points of the resting parts and the supporting parts, which ensures long and reliable working.

In an embodiment of the telephone unit with the hinge means connected to the movable stop part and with a switch which is fitted in the base part and is operated by the end part of the handset, the telephone unit preferably has transmission means which are connected to the movable stop part and comprise an operating arm for operating the switch, and which are capable of moving the control element essentially linearly in synchronism with a rotary movement of the movable stop part. This means that the switch can be fitted at a relatively great distance from the movable stop part, for example on a printed circuit board which is fitted in the base part in a position which is upstream of the insertion direction of the handset.

The transmission means preferably comprise a torsion bar which runs parallel to the hinge pin and is fixed to the movable stop part at a distance from the pin, and to which the control element is fixed. In this way the movable stop part and the transmission means comprising the torsion bar and the control element are composed of a single unit, which means that the cost of the telephone unit can be reduced.

The surfaces of the movable end part and of the end part of the handset preferably have, in the insertion direction at a distance from the insertion aperture, a projecting part and another recess lying opposite when the end part of the handset is placed in the holding space, and when the end part of the handset is placed in the holding space the projecting part is accommodated in the other recess. This increases the angle through which the handset has to be turned relative to the base part in order to free the end part thereof from the supporting part of the holding space, which further counteracts accidental slipping of the handset from the base part.

The invention is explained with reference to the drawings. In the drawings:

Fig. 1 shows a perspective view of a wall telephone unit according to the invention;

Fig. 2 shows in perspective, and taken apart, parts of the telephone unit of Fig. 1;

Fig. 3 shows a longitudinal section of a part of the base part of the telephone unit without a handset hung up in the base part; and

Fig. 4 shows a longitudinal section of the base part of the telephone unit in which the handset is hung up.

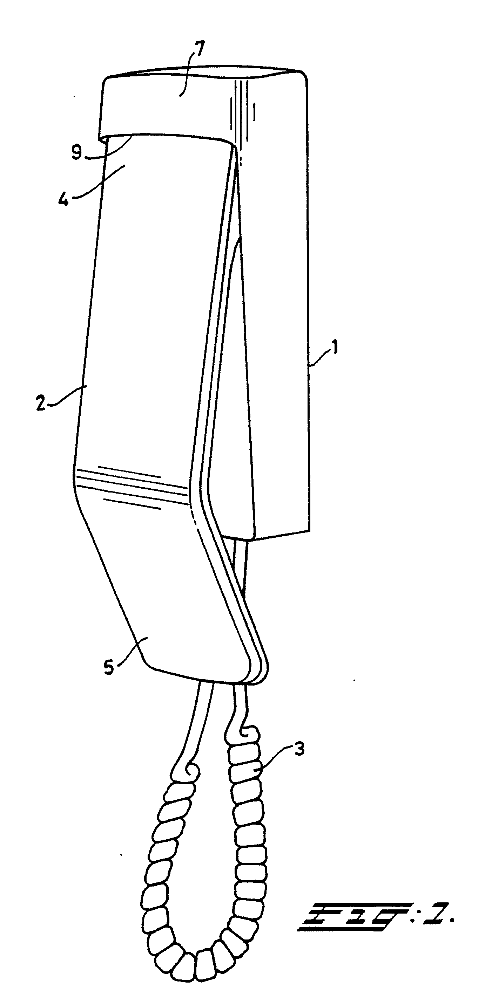

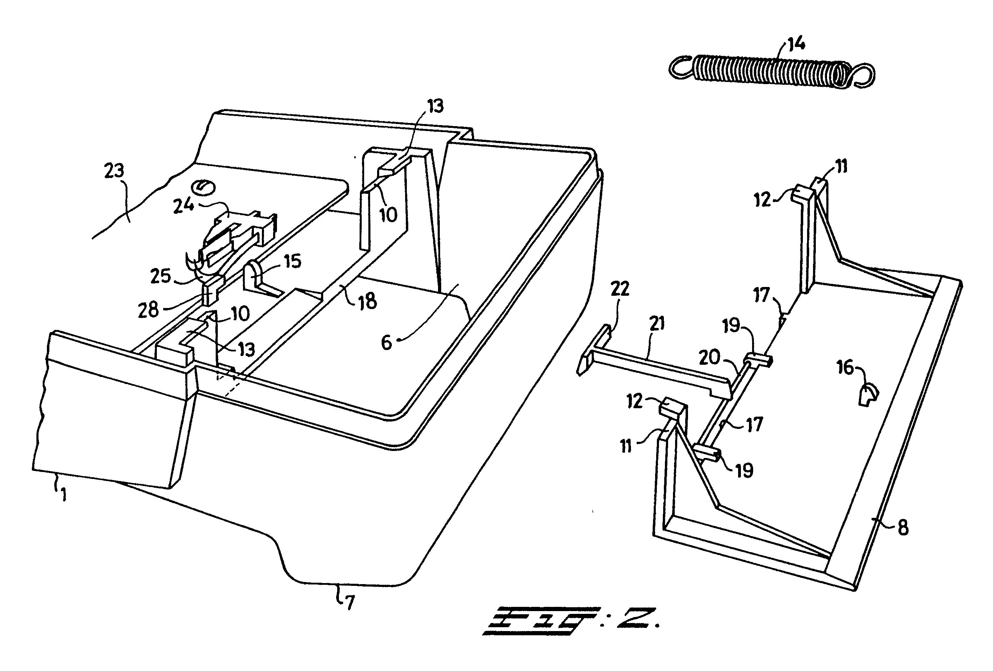

Fig. 1 shows in perspective a wall telephone unit according to the invention. The telephone unit comprises a base part 1 and a handset or handle 2 which are connected to each other by means of an electric cable 3. The handset 2 has two end parts 4, 5 containing a loudspeaker part and a microphone part respectively. The base part 1 has a holding space 6 (Fig. 2) which is bounded by a fixed stop part 7 and a movable stop part 8, which is fitted in the base part 1 at a distance opposite the fixed stop part 7. The holding space 6 has an insertion aperture 9 to allow through the end part 4 of the handset 2.

The base part 1 and the movable stop part 8 each have a supporting part 10, 11 respectively suitable for supporting thereon a resting part 12, 13 of the stop part 8 and the base part 1 respectively. The opposite-lying faces of the supporting parts 10, 11 and the resting parts 12, 13 have slanting faces for the formation of hinges of the knife-edge hinge type. The contact points of the supporting parts 10, 11 and the resting parts 12, 13 of the hinges are in line with one another, so that a hinge connection between the base part 1 and the stop part 8 is produced.

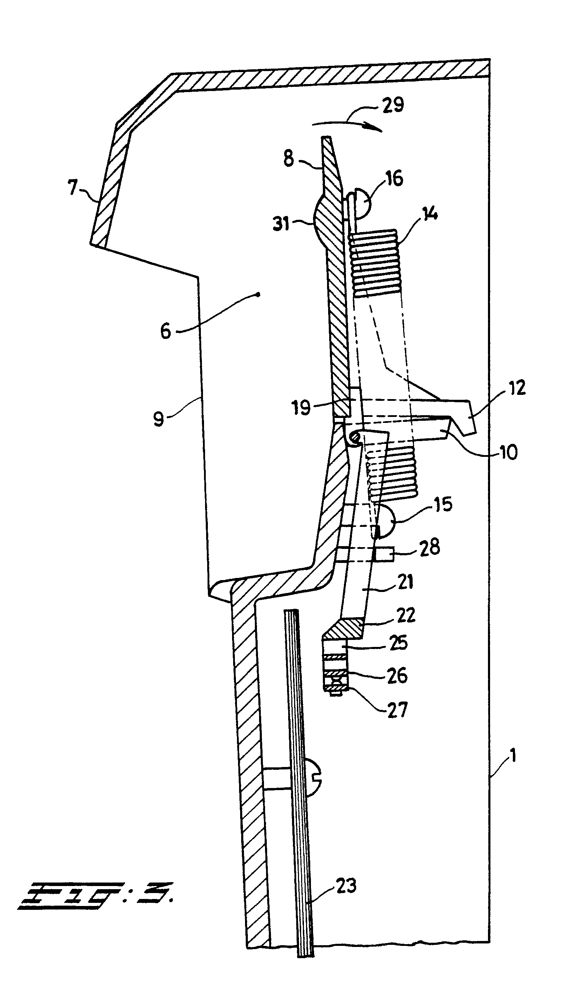

The ends of a tension spring 14 are connected to a projection 15 of the base part 1 and a projection 16 of the stop part 8. This means that after fitting of the parts, when the handset 2 is not hung up in the base part 1, the stop part 8 is drawn to the position shown in Fig. 3, in which lobes 17 of the stop part 8 rest against an edge 18 of the base part 1.

The stop part 8 has a torsion bar 20 which is formed between two arms 19, and to which one end of an elongated control element 21 is connected. The other end of the control element 21 has an end piece 22 running at right angles to the element.

A printed circuit board 23 with a switch 24 is fitted in the base part 1. When the handset 2 is not hung up in the base part 1 (Fig. 3) the end piece 22 of the control element 21 presses against a resilient part 25 of the switch 24, which energizes the switch (in Fig. 3 with closed contacts 26 and 27).

Movement of the control element 21 in a direction at right angles to the printed circuit board 23 is essentially counteracted by a knob part 28 of the base part 1.

The distance between the stop parts 7 and 8 in the situation shown in Fig. 3 is smaller than the corresponding dimension of the end part 4 of the handset 2.

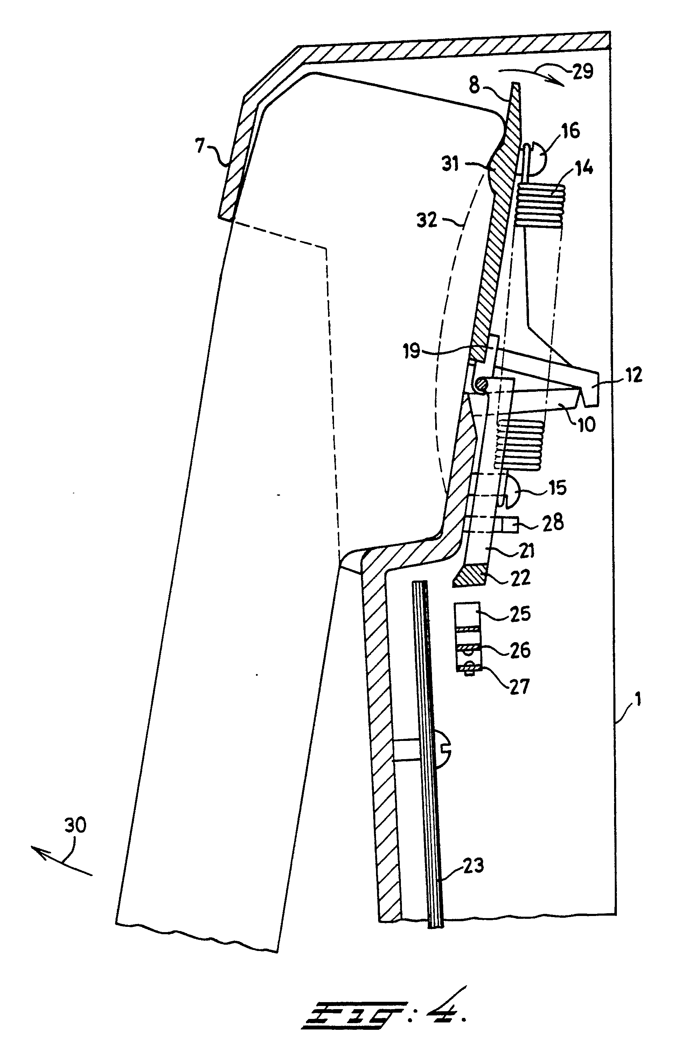

When the end part 4 of the handset 2 is inserted into the holding space 6 through the insertion aperture 9, the stop part 8 will turn in the direction of the arrow 29, so that the situation shown in Fig. 4 is obtained. In the situation of Fig. 4 the end piece 22 of the control element 21 is clear of the resilient part 25 of the switch 24, as a result of which the energizing of the switch 24 is stopped (in the example the contacts 26 and 27 are opened). In this situation the control element 21 is free from the knob part 28. When the handset 2 is subsequently turned in the direction of the arrow 30 in order to remove it from the base part 1, the stop part 8 will first turn further in the direction of the arrow 29 and, when the handset 2 moves out of the holding space 6, said part will then turn in the opposite direction to that of the arrow 29, in which case the control element 21 will be guided against the knob part 28, causing the torsion bar 20 to twist, so that a turning movement of the stop part 8 is converted into an essentially linear displacement of the control element 21. This means that the switch 24 can even be fitted on the printed circuit board 23 at a great distance from the stop part 8.

Since the stop part 8, the hinge means 11, 12 and the transmission means 19, 20 of the stop part 8 and the control element 21 can be one integral unit, this unit can be manufactured cheaply in one go.

The stop part 8 preferably has opposite the stop part 7 a projection 31 which is accommodated in a corresponding recess 32 of the end part 4 when the handset 2 is placed in the holding space 6. This increases the angle through which the handset 2 has to be turned in order to remove the handset 2 from the base part 1, and accidental slipping out is further counteracted.

Various modifications are possible within the scope of the invention. It is, for example, possible to fit a tension spring in the holding space 6 between the stop parts 7 and 8, instead of the spring 14. It is also possible, instead of the spring 14, to use a compression spring which on the right in Fig. 3 rests against the stop part 8 and at a distance against a part (not shown) of the base part 1.

It is also possible, instead of the fixed stop part 7, to use a hinged stop part which is drawn by spring means in the direction of the stop part 8. The stop part 8 can in this case remain rotatable or can be fixed.

## Claims

1. Wall telephone unit, comprising a base part and a handset, the base part having a recess to permit the accommodation therein of an end part of the handset for hanging up the handset on the base part, and the end part resting on a bottom supporting part of the recess when the handset is hung up, **characterized in that** the recess is bounded by a fixed stop part and a stop part lying opposite which is movable essentially at right angles to the fixed stop part, in such a way that the stop parts form a holding space for retaining at least a part of the end part of the handset, the holding space having an insertion aperture for allowing through the end part of the handset, and the movable stop part being pressed towards the fixed stop part by resilient means.

2. Wall telephone unit according to Claim 1, **characterized in that** the distance between the stop parts when the end part of the handset is removed from the holding space is smaller than the corresponding dimension of the end part of the handset.

3. Wall telephone unit according to Claim 1 or 2, **characterized** by hinge means fitted on the insertion side of the holding space between the base part and the movable stop part, with a pin running at right angles to the direction of insertion of the end part of the handset.

4. Wall telephone unit according to Claim 3, **characterized in that** the hinge means comprise hinges of the knife-edge hinge type, both the movable stop part and the base part having at least one resting part and at least one supporting part for supporting a resting part, and the contact points between the resting parts and the supporting parts of all hinges lying in line with one another.

5. Wall telephone unit according to Claim 2, in which the base part contains a switch which is operated by the end part of the handset when the end part is moved into or out of the recess, **characterized in that** the switch is operated by the movable stop part.

6. Wall telephone unit according to Claim 3 or 4, in which the base part contains a switch which is operated by the end part of the handset when the end part is moved into or out of the recess, **characterized** by transmission means which are connected to the movable stop part and comprise an operating arm for operating the switch, and which are capable of moving the control element essentially linearly in synchronism with a rotary movement of the movable stop part.

7. Wall telephone unit according to Claim 6, **characterized in that** the transmission means comprise a torsion bar which runs parallel to the hinge pin and is fixed to the movable stop part at a distance from the pin.

8. Wall telephone unit according to Claim 1, **characterized in that** the surfaces of the movable end part and of the end part of the handset have, in the insertion direction at a distance from the insertion aperture, a projecting part and another recess lying opposite when the end part of the handset is placed in the holding space, and when the end part of the handset is placed in the holding space the projecting part is accommodated in the other recess.

*FIG. 2.*

Fig. 2.

EP 0 409 346 A1

Fig.3.

FIG. 4.

# EUROPEAN SEARCH REPORT

European
Patent Office

Application Number

**EP 90 20 1940**

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| X | US-A-2 375 681 (OBERGFELL)<br>* Page 1, right-hand column, line 18 - page 3, left-hand column, line 46; figures 1-9 *<br>– – – | 1-3,5,6,8 | H 04 M 1/02 |
| A | | 4,7 | |
| X | US-A-2 439 218 (OBERGFELL)<br>* Column 2, line 19 - column 6, line 73; figures 1-7 *<br>– – – | 1-3,5,6,8 | |
| A | | 4,7 | |
| A | US-A-2 351 125 (HENRIKSON)<br>* Page 1, left-hand column, line 49 - page 3, left-hand column, line 35; figures 1-5 *<br>– – – | 1-3 | |
| A | US-A-4 710 596 (KUROKAWA)<br>* Column 5, line 39 - column 6, line 43; figures 4-6 *<br>– – – | 1-3 | |
| A | US-A-3 889 071 (DAVIS et al.)<br>* Figures 2-3 *<br>– – – – – | 1-3 | |

TECHNICAL FIELDS
SEARCHED (Int. Cl.5)

H 04 M

The present search report has been drawn up for all claims

| Place of search | Date of completion of search | Examiner |
|---|---|---|
| The Hague | 29 October 90 | DELANGUE P.C.J.G. |

CATEGORY OF CITED DOCUMENTS

X : particularly relevant if taken alone
Y : particularly relevant if combined with another document of the same catagory
A : technological background
O : non-written disclosure
P : intermediate document
T : theory or principle underlying the invention

E : earlier patent document, but published on, or after the filing date
D : document cited in the application
L : document cited for other reasons

& : member of the same patent family, corresponding document